(19)

Europäisches
Patentamt
European
Patent Office
Office européen
des brevets

(11) **EP 2 363 236 B1**

(12) **EUROPEAN PATENT SPECIFICATION**

(45) Date of publication and mention
of the grant of the patent:
**23.05.2012 Bulletin 2012/21**

(51) Int Cl.:
***B23Q 11/00*** *(2006.01)*

(21) Application number: **11155241.0**

(22) Date of filing: **21.02.2011**

(54) **Balancing system for machine tool**

Ausgleichssystem für eine Werkzeugmaschine

Système d'équilibrage pour une machine-outil

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2010 IT MO20100048**

(43) Date of publication of application:
**07.09.2011 Bulletin 2011/36**

(73) Proprietor: **PAMA S.P.A.**
**38068 Rovereto (TN) (IT)**

(72) Inventors:
• **Nainer, Alberto**
**38123 Trento (IT)**

• **Carotta, Gianluca**
**36040 Pedemonte (VI) (IT)**
• **Procaccini, Mauro**
**38060 Calliano(TN) (IT)**

(74) Representative: **Cicconetti, Andrea et al**
**Luppi Crugnola & Partners S.r.l.**
**Viale Corassori, 54**
**41124 Modena (IT)**

(56) References cited:
**EP-A2- 0 059 847     DE-A1- 2 328 404**

EP 2 363 236 B1

**Description**

The present invention relates to machine tools, in particular it refers to a balancing system that is applicable to portal machine tools with a movable crosspiece of large dimensions.

Known portal machine tools with movable crosspiece comprise a crosspiece that is vertically movable along two uprights or columns that are spaced apart from one another and placed on the sides of a supporting table on which the workpieces are positionable. On the crosspiece there is slidably mounted, by a respective carriage, an operating head, generally provided with a vertical work axis, which is perpendicular to the supporting table.

The crosspiece is mounted slidably on linear guides of the uprights and is driven vertically by movement members, typically comprising drive screws driven by respective motors.

The head is mounted through the carriage on guides of the crosspiece and is movable horizontally on the latter.

In machine tools of large dimensions the great weight of the crosspiece-head assembly, which is normally of a magnitude greater than the thrusts exerted by the operating head on the workpieces during machining, obliges the manufacturers to make particular constructional choices to move and balance the crosspiece appropriately.

In particular, the difficulty of balancing the crosspiece that is movable with respect to other vertical axes of the machine tool lies in the fact that the operating head slides horizontally thereupon, the weight of which is slightly less than that of the crosspiece. The centre of gravity of the crosspiece-head assembly thus has a significant range along the crosspiece in function of the position of the head. Consequently, the movement members of the crosspieces are subject to loads of a considerably variable amount. For example, when the head is in an off-centre position, i.e. more or less far from a middle plane of the crosspiece, the weight thereof lies more or less completely on the upright nearer thereto, whereas the further upright is partially or totally relieved of the aforesaid load.

The considerable weight of the crosspiece-head assembly further causes an elastic deformation of the crosspiece, in particular a flexure of the latter in a vertical plane that is parallel to the uprights and orthogonal to the work table.

The flexure of the crosspiece causes a lowering of the operating head with respect to a theoretical vertical positioning height and, except for positions near the middle of the crosspiece, a simultaneous rotation on the aforesaid vertical plane. As a consequence, the work axis of the operating head is no longer vertical, but tilted by an angle the size of which is a function of the position of the head along the crosspiece.

Lowering and rotating the operating head can thus cause errors and imprecisions during machining of the workpieces. Machine tools are known that are provided with movement members of the movable crosspiece that is amply overdimensioned in such a manner as to support the variable loads due to the movability of the head along the crosspiece. In particular, these machines are provided with very powerful motors that are able to move the crosspiece without the need for balancing the latter with counterweights. Nevertheless, owing to the overdimensioned movement members these machine tools are nevertheless bulky, costly and highly energy consuming.

Further, in such machines for limiting the load of the motors and energy consumption, the movable crosspiece is used only as a positioning axis of the operating head; the latter is locked by suitable devices after positioning thereof and is not able to perform interpolations, i.e. act as a work axis during machining of the workpieces.

The aforesaid known machines do not then enable deformation of the crosspiece and thus lowering and rotating of the operating head to be limited.

Machine tools are further known that are provided with so-called static balancing systems, which comprise counterweights acting on the crosspiece at the uprights. These balancing systems enable the loads acting on the movement means to be diminished or even cancelled when the head is arranged on the middle of the crosspiece, i.e. equidistant from the uprights. Nevertheless, these systems, when the head is moved from the middle (for example arranged at one end of the crosspiece) do not enable the aforesaid loads to be balanced appropriately and the elastic deformation of the crosspiece and therefore the lowering and the rotation of the operating head to be reduced.

Patent DE2328404 discloses a machine tool provided with a carriage that is movable vertically along an upright by means of sliding guides and supporting a horizontally movable operating head. Two cables, or chains, are fixed to the carriage that are connected to a counterweight that is movable inside the upright. The first cable connects a front end of the carriage to the counterweight, the second cable connects the rear end of the carriage to the counterweight. The first cable is fixed to the front end of the carriage by interposing a piston-cylinder unit that enables the length of such a first cable to be varied. A sensor detects the actual position of the carriage and sends the signal to a regulator that compares the signal with a nominal position. On the basis of the detected position difference, the regulator regulates the pressure inside the piston-cylinder unit in such a manner as to correct the carriage position in order to lighten the sliding guides of the upright and to ensure that a longitudinal axis of the operating head is always horizontal and orthogonal to the aforesaid guides. One object of the present invention is to improve known balancing systems for machine tools, in particular of portal machine tools of large dimensions, provided with crosspieces that are movable on uprights and support operating heads. Another object is to make a balancing system that enables deformation of the crosspiece and thus lowering and/or rotation of the operating head to be limited and/or controlled, whatever the position of the latter on the crosspiece.

A further object is to obtain a system for balancing a movable crosspiece of a machine tool that enables the forces weighing on the movement means of the crosspiece to be reduced considerably such as to reduce the dimensions and power of the latter, ensuring at the same time movement speed and positioning precision that are such as to enable the crosspiece to be used both to position the head with respect to a workpiece (positioning axis) and to move the head during machinings (work axis).

Still another object is to devise a balancing system having a simple and compact structure, that has reliable operation and is easily applicable to machine tools.

According to the invention there is provided a balancing system for a machine tool according to claim 1.

The invention can be better understood and implemented with reference to the attached drawings, which illustrate an embodiment thereof by way of non-limiting example, in which:

Figure 1 is a frontal perspective view of the balancing system of the invention associated with a portal machine tool with a movable crosspiece;
Figure 2 is a schematic frontal view of the system and of the machine in figure 1;
Figure 3 is a schematic figure that illustrates forces acting on a movable crosspiece of the machine in figure 1, in an operating configuration;
Figure 4 is a frontal perspective view of a version of the balancing system of the invention associated with a portal machine tool with a movable crosspiece;
Figure 5 is a schematic frontal view of the system and of the machine in figure 4;
Figure 6 is a schematic figure that illustrates forces acting on a movable crosspiece of the machine in figure 4 in an operating configuration.

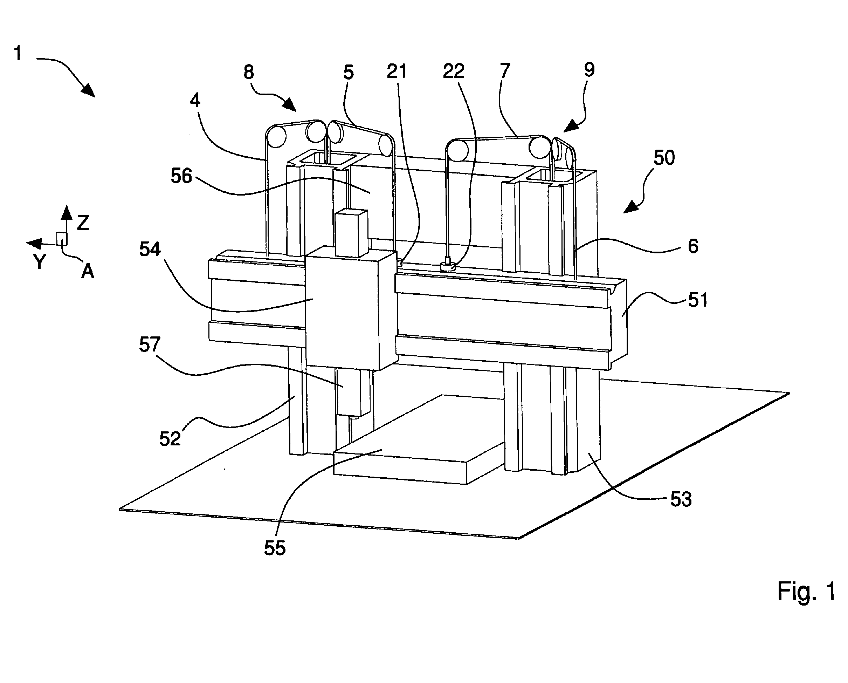

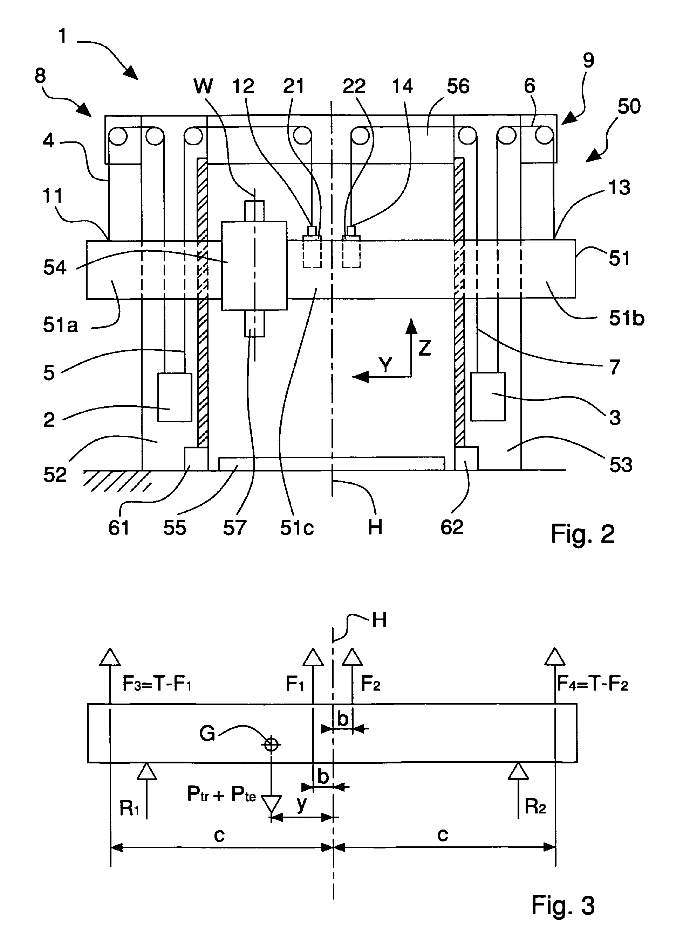

With reference to figures 1 and 2, with 1 there is indicated a balancing system 1 applied to a portal machine tool 50 of large dimensions provided with a crosspiece 51 that is movable along a first vertical direction Z on a first upright 52 and a second upright 53, arranged parallel and spaced apart on the sides of a supporting table 55 of the workpieces. The crosspiece 51 slidably supports an operating head 54 movable along a second horizontal direction Y. The operating head 54 further comprises an operating part 57 that is movable along a work axis W that is substantially parallel to the first direction Z.

The crosspiece 51 is moved in the first direction Z by movement means 61, 62, of known type, inserted inside the uprights 52, 53 and comprising, for example, movement screws driven by respective rotary motors.

The balancing system 1 comprises first compensating means 2 and second compensating means 3 associated respectively with the first upright 52 and with the second upright 53 and connected to the crosspiece 51 respectively by first cable means 4, 5 and second cable means 6, 7.

Actuating means 21, 22 is interposed between the cable means 4, 5, 6, 7 and the crosspiece 51 and arranged for exerting compensating forces $F_1$, $F_2$ that are adjustable in function of a position of the operating head 54 on the crosspiece 51 in such a manner as to limit and/or control at least a deformation of said crosspiece 51, as explained in greater detail further on in the description.

The actuating means comprises first actuating means 21 and second actuating means 22 arranged for exerting on the first cable means 4, 5 and on the second cable means 6, 7 respective balancing forces T, which are substantially equal.

The first compensating means 2 and the second compensating means 3 comprise respectively a first counterweight, or balancing weight, and a second counterweight that are slidably housed inside the respective uprights and having the same weight, such as to generate the balancing forces T on the cable means.

Alternatively, the first compensating means 2 and the second compensating means 3 can comprise hydraulic compensating devices, fixed to the uprights 52, 53 and able to exert on the respective cable means 4, 5 constant and controlled balancing forces.

The cable means 4, 5, 6, 7 comprises cables, lines, chains or other similar flexible and substantially non-extendible elements.

The first cable means 4, 5 comprises a first cable 4 and a further first cable 5, each of which having respective ends fixed to the first counterweight 2 and to the crosspiece 51. Similarly, the second cable means 6, 7 comprises a second cable 6 and a further second cable 7, each of which having respective ends fixed to the second counterweight 3 and to the crosspiece 51.

Alternatively, the first cable means and the second cable means can comprise respective single cables fixed at the ends to the crosspiece 51 and locked in a central portion on the counterweights 2, 3.

The first cable means 4, 5, in addition to being fixed to the first counterweight 2, is fixed to the crosspiece 51 in a pair of suspension points 11, 12, with one of which the first actuating means 21 is associated.

Similarly, the second cable means 6, 7 in addition to being fixed to the second counterweight 3 is fixed in a further pair of suspension points 13, 14 with one of which the second actuating means 22 is associated.

Each pair of suspension points 11, 12, 13, 14 comprises a suspension point 11, 13 that is positioned at an end portion 51a, 51b of said crosspiece 51 and a suspension point 12, 14 that is positioned at a central portion 51c of said crosspiece 51.

The suspension points 11, 12, 13, 14 are in particular portions or parts of the crosspiece 51 to which the cable means 4, 5, 6, 7 is connected through fixing means that is of known type and is not illustrated in detail in the figures.

The balancing system 1 of the invention thus has four suspension points 11, 12, 13, 14 of the crosspiece 51. The first cable means 4, 5 and the second cable means 6, 7 exert on the crosspiece 51 respective compensating forces $F_1$, $F_2$ in the suspension points 12, 14 with which the actuating means 21, 22 are associated and respective further compensating forces $F_3$, $F_4$ in the respective remaining suspension points 11, 13.

The first cable 4 has one end fixed to a first suspension point 11 of the crosspiece 51, the remaining end being fixed to the first counterweight 2. The further first cable 5 has one end fixed to a second suspension point 12 of the crosspiece 51, the remaining end being fixed to the first counterweight 2. The first actuating means 21 is fixed to the crosspiece 51 at, for example, the second suspension point 12 and is thus interposed between the crosspiece 51 and an end of the further first cable 5.

The first suspension point 11 is positioned at a first end portion 51a of the crosspiece 51, whilst the second suspension point 12 is positioned in a central portion 5c of the crosspiece 51.

The first cable 4 and the further first cable 5 are further wound around and supported by first pulley means 8 fixed to the first upright 52 and to a fixed crosspiece 56 that connects the tops of the aforesaid uprights. The first pulley means 8 comprises four respective pulleys arranged in such a manner that the branches of the first cable means 4, 5 connected to the crosspiece 51 and to the first counterweight 2, are parallel and vertical.

The second cable 6 has one end fixed to a third suspension point 13 of the crosspiece 51, the remaining end being fixed to the second counterweight 3. The further second cable 7 has one end fixed to a fourth suspension point 14 of the crosspiece 51, the remaining end being fixed to the second counterweight 3.

The second actuating means 22 is fixed to the crosspiece 51 at, for example, the fourth suspension point 14 and is thus interposed between the crosspiece 51 and an end of the further second cable 7.

The third suspension point 13 is positioned at a second end portion 51b of the crosspiece 51, opposite the first end portion 51a, whilst the fourth suspension point 14 is associated with the central portion 5c of the crosspiece 51. The second cable 6 and the further second cable 7 are further wound around and supported by second pulley means 9 fixed to the second upright 53 and to the fixed crosspiece 56 and comprising in particular fourth respective pulleys arranged in such a manner that the branches of the second cable means 6, 7 connected to the crosspiece 51 and to the second counterweight 3 are parallel and vertical.

The first suspension point 11 and the third suspension point 13 are arranged on opposite sides with respect to a middle plane H of the crosspiece 51, from which they are distanced by the same preset first distance c along the second direction Y. The second suspension point 12 and the fourth suspension point 14 are adjacent and placed on sides opposite the middle plane H of the crosspiece 51, from which they are spaced by the same preset second distance b along the second direction Y.

In one version of the balancing system of the invention, which is not illustrated, the first actuating means 21 and the second actuating means 22 are fixed to the crosspiece 51 at respectively the first suspension point 11 and the third suspension point 13, i.e. at the opposite second end portion 51a, 51b of the crosspiece 51.

The first actuating means 21 and the second actuating means 22 comprise, for example, respective hydraulic cylinders, controlled via pressure-adjusting valves that are not illustrated, by a control unit of the machine tool 50.

In another version of the balancing system, which is not illustrated in the figures, the first actuating means 21 can comprise two hydraulic cylinders fixed to the crosspiece 51 in the first suspension point 11 and in the second suspension point 12 and similarly the second actuating means 22 can comprise two hydraulic cylinders fixed to the crosspiece in the third suspension point 13 and in the fourth suspension point 14.

The first actuating means 21 and the second actuating means 22 are able to exert respectively a first compensating force $F_1$ on the first cable 4 and a second compensating force $F_2$ on the second cable 6.

As illustrated in the diagram in Figure 3, the crosspiece 51 is thus subject in the central portion 51c to a first compensating force $F_1$ and a to second compensating force $F_2$, acting respectively on the second suspension point 12 and on the fourth suspension point 14.

The crosspiece 51 is also subject in the end portions 51a, 51b to a further first compensating force $F_3$ and to a further second force $F_4$ acting respectively on the first suspension point 11 and on the third suspension point 13 and equal to:

$$F_3 = T - F_1 \qquad\qquad [eq.\ 1]$$

$$F_4 = T - F_2 \qquad\qquad [eq. 2]$$

The first upright 52 and the second upright 53, and in particular the respective movement means 61, 62, are subject respectively to a first vertical load $R_1$ and to a second vertical load $R_2$, which are a function of the weight of the crosspiece 51 and of the operating head 54 and of the counterweights 2, 3 according to the equation:

$$R_1 + R_2 = P_{tr} + P_{te} - 2T \qquad\qquad [eq. 3]$$

where:

$P_{tr}$, weight of the crosspiece 51;
$P_{te}$, weight of the operating head 54;
T, balancing force (weight) of the counterweight 2, 3.

The weight T of the counterweights 2, 3 can be chosen in such a way as to balance the weight of the crosspiece 51 and of the operating head 54 ($2T = P_{tr} + P_{te}$) and to make the loads $R_1$, $R_2$ substantially nil on the movement means 61, 62, in a centred configuration of the crosspiece 51, in which the head 54 is arranged on the middle plane H.
The balancing system 1 of the invention, as explained further on in detail in the description, enables the weight of the crosspiece 51 and of the operating head 54 to be balanced effectively and precisely, regardless of the position of the latter along the crosspiece. It is thus possible to limit and control deformation (flexure) of the crosspiece 51 on a vertical plane A, that is parallel to the uprights 52, 53, in such a manner as to reduce a lowering of the operating head 51 along the first direction Z and, above all, a rotation thereof on said plane A, said rotation determining the undesired tilt of the work axis W of the aforesaid head 54.
Figures 1 to 3 illustrate the machine tool 50 in an operating configuration in which the head 54 is moved along the crosspiece 51 towards the first upright 52 with respect to the middle plane H, in such a manner that a centre of gravity G of the assembly consisting of the crosspiece 51 and of the head 54 is at a distance y from the aforesaid middle plane H.
Figure 3 illustrates the distribution of the forces in this last configuration.
It is possible to calculate the values of the compensating forces $F_1$, $F_2$ that the actuating means 21, 22 have to exert on the cable means 4, 5 to reduce the lowering and the rotation of the head 54, resolving the following system of equations, which imposes the balancing of forces and moments acting on the crosspiece-head assembly:

$$F_3 + F_1 + F_2 + F_4 = P_{tr} + P_{te} \qquad\qquad [eq. 4]$$

$$F_3 \cdot c + F_1 \cdot b - (P_{tr} + P_{te}) \cdot y = F_2 \cdot b + F_4 \cdot c \qquad\qquad [eq. 5]$$

As the further compensating forces $F_3$ and $F_4$ are expressible in function of the compensating forces $F_1$, $F_2$ and of the balancing force T (for example for the load configuration in figure 3 through the formulas set out above eq. 1 and eq. 2), the equations eq. 2 and eq. 3 can be reformulated as follows:

$$(T - F_1) + F_1 + F_2 + (T - F_2) = P_{tr} + P_{te} \qquad\qquad [eq. 6]$$

$$(T - F_1) \cdot c + F_1 \cdot b - (P_{tr} + P_{te}) \cdot y = F_2 \cdot b + (T - F_2) \cdot c \qquad [eq. 7]$$

from which the following is obtained:

$$(F_1 - F_2) \cdot (b - c) = 2T \cdot y \qquad\qquad [eq. 8]$$

As infinite combinations of forces $F_1$, $F_2$ exist that satisfy this relation, it can be set:

$$F_1 + F_2 = p \cdot T \qquad\qquad\qquad [eq. 9]$$

p being an adimensional parameter comprised between 0 and 2, in particular comprised between 1 and 1.5, and such that the compensating forces F1 and F2 are both positive and determine the value of p that minimises the deformation of the crosspiece 51.

By imposing, for example, that in the central portion 51c of the crosspiece the balancing forces $F_1$, $F_2$ are equal to 50% of the balancing force T, i.e. that:

$$F_1 + F_2 = T, \text{ with } p = 1 \qquad\qquad [eq. 10]$$

from the equations [eq. 8] and [eq. 10] there is obtained:

$$F_1 = \frac{T \cdot (b - c - 2y)}{2(b - c)} \qquad\qquad [eq. 11]$$

$$F_2 = \frac{T \cdot (b - c + 2y)}{2(b - c)} \qquad\qquad [eq. 12]$$

In the centred configuration of the crosspiece 51, in which the head 54 is arranged on the middle plane H, the centre of gravity G of the crosspiece-head assembly is arranged on said middle plane H (y = 0) for which there is obtained:

$$F_1 = F_2 = T/2$$

The balancing forces $F_1$, $F_2$ acting on the central portion 51c of the crosspiece and equal to 50% of the balancing force T of the compensating means 2, 3 enable the flexure of the crosspiece 51 to be reduced. Nevertheless, in this configuration it is possible to increase the compensating forces $F_1$, $F_2$ exerted by the actuating means 21, 22 in order to minimise the flexure of the crosspiece 51 and the lowering of the head 54 by imposing, for example, that the parameter p is approximately equal to 1.5:

$$F_1 + F_2 \approx 1.5 \ T$$

In order to avoid the complete unloading of one of the cables 4, 5, 6, 7, it is appropriate that the first force $F_1$ and the second force $F_2$ have values comprised between 10-90% of the balancing force T:

$$F_1 = (0.1 \div 0.9) \cdot T$$

$$F_2 = (0.1 \div 0.9) \cdot T$$

Owing to the balancing system 1 of the invention, it is thus possible to reduce considerably or even cancel the forces $R_1$, $R_2$ acting on the uprights 52, 53 of the machine tool 50, and in particular acting on the movement means 61, 62 of the crosspiece 51. The movement means can have moderate dimensions and powers, enabling the installation and management costs of the machine tool to be reduced.

By adjusting the compensating forces $F_1$, $F_2$ in function of the position of the operating head 54 on the crosspiece 51 by the equations set out above, it is further possible to contain the deformation of the crosspiece 51 and thus reduce the lowering, and, in particular, minimise the rotation of the operating head 54. In this manner, the work axis W of the latter is substantially vertical for any position of the head 54.

The balancing system 1 of the invention thus enables the crosspiece 51 to be moved at a movement speed and with positioning precision that is such as to enable the aforesaid crosspiece 51 to be used both for positioning the head 54 in relation to the workpiece and to move the head 54 during machinings. In other words, the movement means 61, 62, by virtue of the lighter loads $R_1$, $R_2$, is able to move the movable crosspiece 51 in such a manner that it acts for the operating head 54 as both a positioning axis and as a work axis.

The balancing system 1 of the invention has a simple and compact structure, with reliable and safe operation as it comprises cables wound on pulleys and connected to simple counterweights and hydraulic cylinders.

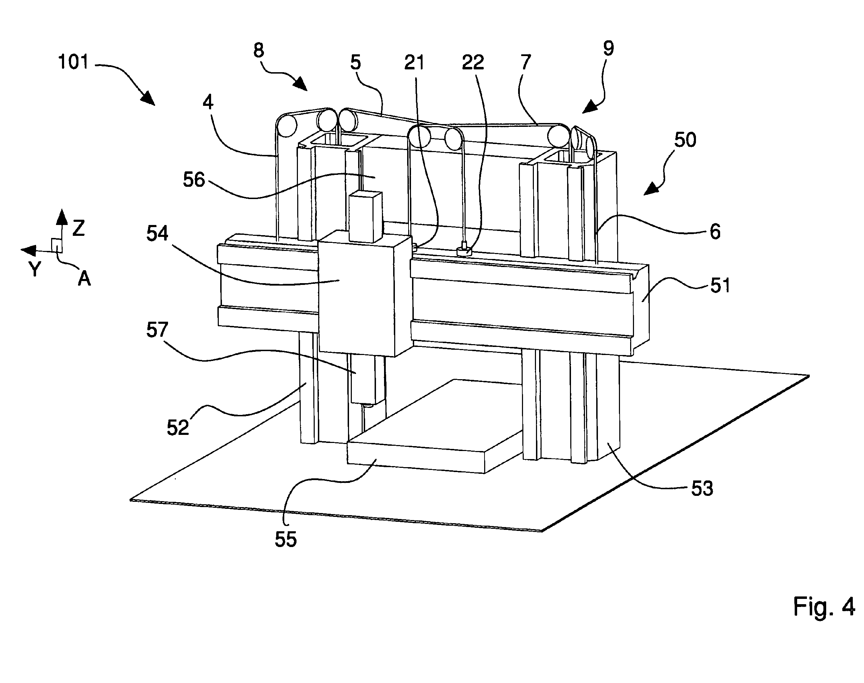

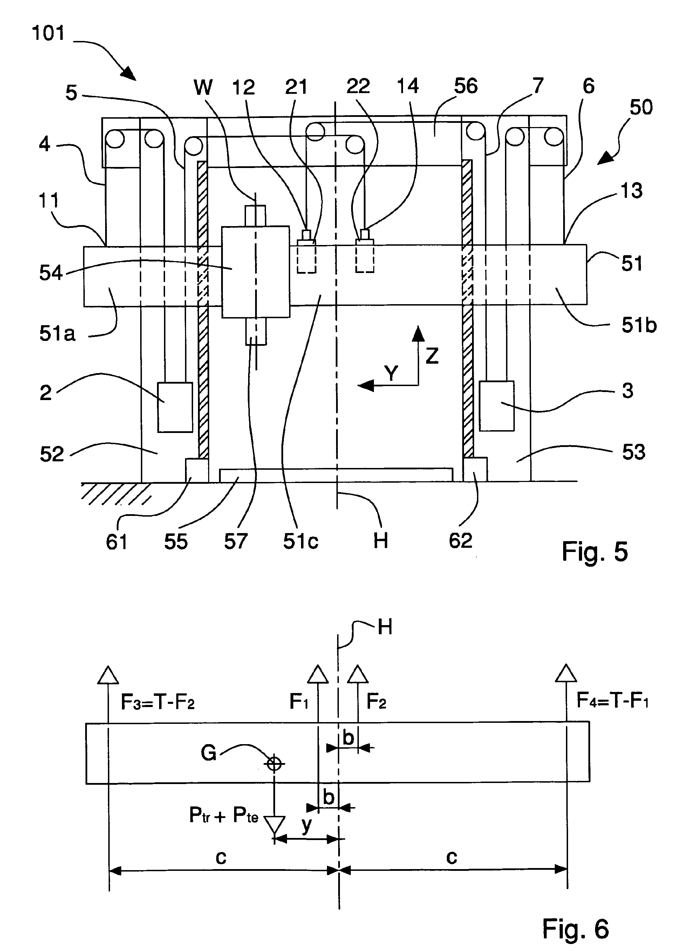

Figures 4 and 5 illustrate a version of the balancing system 101 of the invention applied to the same machine tool 50, that differs from the balancing system described above through the different connection of the first cable means 4, 5 and of the second cable means 6, 7 to the crosspiece 51. In particular, the first cable means 4, 5 in addition to being fixed to the first counterweight 2 is fixed to the crosspiece 51 in a pair of suspension points 11, 14, with one of which the second actuating means 22 is associated.

Similarly, the second cable means 6, 7, in addition to being fixed to the second counterweight 3, is fixed in a further pair of suspension points 13, 12, with one of which the first actuating means 21 is associated.

More in detail, in this version the further first cable 5 is fixed to the fourth suspension point 14 with which the second actuating means 22 is associated, whilst the further second cable 7 is fixed to the second suspension point 12 with which the first actuating means 21 is associated. In other words, the cable means 4, 5, 6, 7 is crossed.

Figures 4 and 5 illustrate the machine tool 50 in the same operating configuration disclosed above, i.e. the one in which the centre of gravity G of the crosspiece-head assembly is positioned at a distance y from the middle plane H.

As illustrated in figure 6, the crosspiece 51 is subject in the central portion 51c to a first compensating force $F_1$ and to a second compensating force $F_2$ acting respectively on the second suspension point 12 and on the fourth suspension point 14.

The crosspiece 51 is also subject in the end portions 51a, 51b to a further first compensating force $F_3$ and to a further second force $F_4$ acting respectively on the third suspension point 13 and on the third suspension point 11 and in this configuration equal to:

$$F_3 = T - F_2 \qquad\qquad [eq.\ 13]$$

$$F_4 = T - F_1 \qquad\qquad [eq.\ 14]$$

Also in this case it is possible to calculate the values of the compensating forces $F_1$, $F_2$ that the actuating means 21, 22 has to exert on the cable means 4, 5, 6, 7 to reduce lowering and rotation of the head 54 by solving the same system of equations eq. 4 and eq. 5, which imposes balancing of forces and moments acting on the crosspiece-head assembly:

$$F_3 + F_1 + F_2 + F_4 = P_{tr} + P_{te} \qquad\qquad [eq.\ 4]$$

$$F_3 \cdot c + F_1 \cdot b - (P_{tr} + P_{te}) \cdot y = F_2 \cdot b + F_4 \cdot c \qquad\qquad [eq.\ 5]$$

As the further compensating forces $F_3$ and $F_4$ are expressible in function of the compensating forces $F_1$, $F_2$ and of the balancing force T (for example for the load configuration in figure 6 through the formulas eq. 13 and eq. 14), the equations eq. 4 and eq. 5 can be reformulated as follows:

$$(T - F_2) + F_1 + F_2 + (T - F_1) = P_{tr} + P_{te} \qquad\qquad [eq.\ 15]$$

$$(T - F_2) \cdot c + F_1 \cdot b - (P_{tr} + P_{te}) \cdot y = F_2 \cdot b + (T - F_1) \cdot c \qquad [eq.\ 16]$$

from which there is obtained:

$$(F_1 - F_2) \cdot (b + c) = 2T \cdot y \qquad\qquad [eq.\ 17]$$

Also in this case, as there exist infinite combinations of forces $F_1$, $F_2$ that satisfy this relation, it can be set:

$$F_1 + F_2 = p \cdot T \qquad\qquad [eq. \ 9]$$

p being an adimensional parameter comprised between 0 and 2, in particular comprised between 1 and 1.5 and such that the compensating forces F1 and F2 are both positive and determine the value of p that minimises the deformation of the crosspiece 51.

By imposing, for example, that in the central portion 51c of the crosspiece the balancing forces $F_1$, $F_2$ are equal to 50% of the balancing force T, i.e. that:

$$F_1 + F_2 = T, \ with \ p = 1 \qquad\qquad [eq. \ 10]$$

From the equations eq. 10 and eq. 17 there is obtained:

$$F_1 = \frac{T \cdot (b + c + 2y)}{2(b + c)} \qquad\qquad [eq. \ 18]$$

$$F_2 = \frac{T \cdot (b + c - 2y)}{2(b + c)} \qquad\qquad [eq. \ 19]$$

In the centred configuration of the crosspiece 51 in which the centre of gravity G of the crosspiece-head assembly is arranged on the middle plane H (y = 0) there is obtained:

$$F_1 = F_2 = T/2$$

**Claims**

1.  Balancing system for a machine tool (50) provided with a crosspiece (51) that is movable along uprights (52, 53) and slidably supports an operating head (54) comprising:

    - compensating means (2, 3) connected to said crosspiece (51) via cable means (4, 5, 6, 7);
    - actuating means (21, 22) interposed between said cable means (4, 5, 6, 7) and said crosspiece (51) and arranged for exerting compensating forces (F1, F2) that are adjustable in function of a position of said operating head (54) on said crosspiece (51) in such a manner as to limit and/or control at least one deformation of said crosspiece (51);

    **characterised in that**:

    - said compensating means comprises first compensating means (2) and second compensating means (3) respectively connected to said crosspiece (51) by means of first cable means (4, 5) and second cable means (6, 7) of said cable means;
    - said actuating means comprises first actuating means (21) and second actuating means (22);
    - said first cable means (4, 5) is fixed to said crosspiece (51) in a pair of suspension points (11, 12, 13, 14), said first actuating means (21) or said second actuating means (22) being associated with one of said pair of suspension points (11, 12, 13, 14);
    - said second cable means (6, 7) is fixed to said crosspiece (51) in a further pair of suspension points (11, 12, 13, 14), said second actuating means (22) or said first actuating means (21) being associated with one of said further pair of suspension points (11, 12, 13, 14).

2.  System according to claim 1, wherein each pair of suspension points (11, 12, 13, 14) comprises a suspension point (11, 13) that is positioned at an end portion (51a, 51b) of said crosspiece (51) and a suspension point (12, 14) that is positioned at a central portion (51c) of said crosspiece (51).

3.  System according to claim 1 or 2, wherein said first cable means (4, 5) and said second cable means (6, 7) exert on said crosspiece (51) respective compensating forces ($F_1$, $F_2$) in the suspension points (12, 14) to which said actuating means (21, 22) are associated and respective further compensating forces (F3, F4) in the respective remaining suspension points (11, 13).

4.  System according to any preceding claim, wherein said first compensating means (2) and said second compensating means (3) exert respectively on said first cable means (4, 5) and on said second cable means (6, 7) respective balancing forces (T).

5.  System according to claim 3 or 4, wherein said cable means (4, 5, 6, 7) exerts on said crosspiece (51) a first compensating force ($F_1$) generated by said first actuating means (21) in a second suspension point (12), a second compensating force ($F_2$) generated by said second actuating means (22) in a fourth suspension point (14), a further first compensating force ($F_3$) in a first suspension point (11) and a further second compensating force ($F_4$) in a third suspension point (13).

6.  System according to claim 5, wherein said first suspension point (11) and said third suspension point (13) are positioned at respective end portions (51a, 51b) of said crosspiece (51), in particular opposite one another with respect to a middle plane (H) of said crosspiece (51), said second suspension point (12) and said fourth suspension point (14) being positioned at a central portion (51c) of said crosspiece (51), in particular almost adjacent to one another and opposite said middle plane (H).

7.  System according to claim 5 or 6, wherein said first compensating force ($F_1$) and said second compensating force ($F_2$) are calculable in function of a position of a centre of gravity (G) of an assembly comprising said crosspiece (51) and said operating head (54), using the formulas:

$$(F_1 - F_2) \cdot (b - c) = 2T \cdot y \qquad\qquad [eq. 8]$$

or

$$(F_1 - F_2) \cdot (b + c) = 2T \cdot y \qquad\qquad [eq. 17]$$

and

$$F_1 + F_2 = p \cdot T \qquad\qquad [eq. 9]$$

where:

b: distance of said second suspension point (12) and of said fourth suspension point (14) from a middle plane (H) of said crosspiece (51);
c: distance of said first suspension point (11) and of said third suspension point (13) from said middle plane (H);
y: distance of said centre of gravity (G) from said middle plane (H);
p: adimensional constant that is variable between 0 and 2, in particular comprised between 1 and 1.5 such that said compensating forces (F1, F2) are both positive and such as to limit a deformation of said crosspiece (51).

8.  System according to any preceding claim, wherein said first compensating means (2) and said second compensating means (3) respectively comprise a first counterweight, fixed to said first cable means (4, 5), and a second counterweight, fixed to said second cable means (6, 7).

9. System according to any preceding claim, wherein said first cable means (4, 5) comprises a first cable (4) and a further first cable (5), each of which having respective ends fixed to said first compensating means (2) and to said crosspiece (51), and wherein said second cable means (6, 7) comprises a second cable (6) and a further second cable (7), each of which having respective ends fixed to said second compensating means (3) and to said crosspiece (51).

10. System according to any preceding claim, wherein said first cable means (4, 5) is fixed to said crosspiece (51) in a first suspension point (11) and in a second suspension point (12) and said second cable means (6, 7) is fixed to said crosspiece (51) in a third suspension point (13) and in a fourth suspension point (14).

11. System according to any one of claims 1 to 9, wherein said first cable means (4, 5) is fixed to said crosspiece (51) in a first suspension point (11) and in a fourth suspension point (14) and said second cable means (6, 7) is fixed to said crosspiece (51) in a second suspension point (12) and in a third suspension point (13).

12. System according to any preceding claim, wherein said first actuating means (21) and said second actuating means (22) comprise respective hydraulic cylinders.

13. Portal machine tool provided with a crosspiece (51) that is movable along uprights (52, 53) and slidably supports an operating head (54), comprising a balancing system (1) according to any preceding claim.

**Patentansprüche**

1. Ausgleichssystem für eine Werkzeugmaschine (50), die mit einem Querstück (51) versehen ist, das entlang Pfosten (52, 53) beweglich ist und einen Arbeitskopf (54) verschiebbar abstützt, das Folgendes umfasst:

- Kompensationseinrichtungen (2, 3), die mit dem Querstück (51) über Seileinrichtungen (4, 5, 6, 7) verbunden sind;
- Betätigungseinrichtungen (21, 22), die zwischen die Seileinrichtungen (4, 5, 6, 7) und das Querstück (51) eingefügt sind und zum Ausüben von Kompensationskräften (F1, F2) angeordnet sind, die in Abhängigkeit von einer Position des Arbeitskopfs (54) am Querstück (51) in einer solchen Weise einstellbar sind, dass mindestens eine Verformung des Querstücks (51) begrenzt und/oder kontrolliert wird;

**dadurch gekennzeichnet, dass**:

- die Kompensationseinrichtungen eine erste Kompensationseinrichtung (2) und eine zweite Kompensationseinrichtung (3) umfassen, die mittels der ersten Seileinrichtungen (4, 5) bzw. der zweiten Seileinrichtungen (6, 7) der Seileinrichtungen mit dem Querstück (51) verbunden sind;
- die Betätigungseinrichtungen eine erste Betätigungseinrichtung (21) und eine zweite Betätigungseinrichtung (22) umfassen;
- die ersten Seileinrichtungen (4, 5) am Querstück (51) in einem Paar von Aufhängungspunkten (11, 12, 13, 14) befestigt sind, wobei die erste Betätigungseinrichtung (21) oder die zweite Betätigungseinrichtung (22) einem des Paars von Aufhängungspunkten (11, 12, 13, 14) zugeordnet ist;
- die zweiten Seileinrichtungen (6, 7) am Querstück (51) in einem weiteren Paar von Aufhängungspunkten (11, 12, 13, 14) befestigt sind, wobei die zweite Betätigungseinrichtung (22) oder die erste Betätigungseinrichtung (21) einem des weiteren Paars von Aufhängungspunkten (11, 12, 13, 14) zugeordnet ist.

2. System nach Anspruch 1, wobei jedes Paar von Aufhängungspunkten (11, 12, 13, 14) einen Aufhängungspunkt (11, 13), der an einem Endabschnitt (51 a, 51 b) des Querstücks (51) angeordnet ist, und einen Aufhängungspunkt (12, 14), der an einem mittleren Abschnitt (51c) des Querstücks (51) angeordnet ist, umfasst.

3. System nach Anspruch 1 oder 2, wobei die ersten Seileinrichtungen (4, 5) und die zweiten Seileinrichtungen (6, 7) auf das Querstück (51) jeweilige Kompensationskräfte ($F_1$, $F_2$) in den Aufhängungspunkten (12, 14), denen die Betätigungseinrichtungen (21, 22) zugeordnet sind, und jeweilige weitere Kompensationskräfte (F3, F4) in den jeweiligen restlichen Aufhängungspunkten (11, 13) ausüben.

4. System nach einem vorangehenden Anspruch, wobei die erste Kompensationseinrichtung (2) und die zweite Kompensationseinrichtung (3) auf die ersten Seileinrichtungen (4, 5) bzw. auf die zweiten Seileinrichtungen (6, 7) jeweilige Ausgleichskräfte (T) ausüben.

5. System nach Anspruch 3 oder 4, wobei die Seileinrichtungen (4, 5, 6, 7) auf das Querstück (51) eine erste Kompensationskraft ($F_1$), die durch die erste Betätigungseinrichtung (21) in einem zweiten Aufhängungspunkt (12) erzeugt wird, eine zweite Kompensationskraft ($F_2$), die durch die zweite Betätigungseinrichtung (22) in einem vierten Aufhängungspunkt (14) erzeugt wird, eine weitere erste Kompensationskraft ($F_3$) in einem ersten Aufhängungspunkt (11) und eine weitere zweite Kompensationskraft ($F_4$) in einem dritten Aufhängungspunkt (13) ausüben.

6. System nach Anspruch 5, wobei der erste Aufhängungspunkt (11) und der dritte Aufhängungsunkt (13) an jeweiligen Endabschnitten (51a, 51b) des Querstücks (51), insbesondere in Bezug auf eine Mittelebene (H) des Querstücks (51) zueinander entgegengesetzt angeordnet sind, wobei der zweite Aufhängungspunkt (12) und der vierte Aufhängungspunkt (14) in einem mittleren Abschnitt (51c) des Querstücks (51), insbesondere fast benachbart zueinander und gegenüber der Mittelebene (H) angeordnet sind.

7. System nach Anspruch 5 oder 6, wobei die erste Kompensationskraft ($F_1$) und die zweite Kompensationskraft ($F_2$) in Abhängigkeit von einer Position eines Schwerpunkts (G) einer Anordnung mit dem Querstück (51) und dem Arbeitskopf (54) unter Verwendung der folgenden Formeln berechenbar sind:

$$(F_1 - F_2) \cdot (b - c) = 2T \cdot y \qquad\qquad\qquad \text{[Gl. 8]}$$

oder

$$(F_1 - F_2) \cdot (b + c) = 2T \cdot y \qquad\qquad\qquad \text{[Gl. 17]}$$

und

$$F_1 + F_2 = p \cdot T \qquad\qquad\qquad \text{[Gl. 9]}$$

wobei:

b: Abstand des zweiten Aufhängungspunkts (12) und des vierten Aufhängungspunkts (14) von einer Mittelebene (H) des Querstücks (51);
c: Abstand des ersten Aufhängungspunkts (11) und des dritten Aufhängungspunkts (13) von der Mittelebene (H);
y: Abstand des Schwerpunkts (G) von der Mittelebene (H);
p: dimensionslose Konstante, die zwischen 0 und 2 variabel ist, insbesondere zwischen 1 und 1,5 liegt, so dass die Kompensationskräfte (F1, F2) beide positiv sind, und um eine Verformung des Querstücks (51) zu begrenzen.

8. System nach einem vorangehenden Anspruch, wobei die erste Kompensationseinrichtung (2) und die zweite Kompensationseinrichtung (3) ein erstes Gegengewicht, das an den ersten Seileinrichtungen (4, 5) befestigt ist, bzw. ein zweites Gegengewicht, das an den zweiten Seileinrichtungen (6, 7) befestigt ist, umfassen.

9. System nach einem vorangehenden Anspruch, wobei die ersten Seileinrichtungen (4, 5) ein erstes Seil (4) und ein weiteres erstes Seil (5) umfassen, von denen jedes jeweilige Enden aufweist, die an der ersten Kompensationseinrichtung (2) und am Querstück (51) befestigt sind, und wobei die zweiten Seileinrichtungen (6, 7) ein zweites Seil (6) und ein weiteres zweites Seil (7) umfassen, von denen jedes jeweilige Enden aufweist, die an der zweiten Kompensationseinrichtung (3) und am Querstück (51) befestigt sind.

10. System nach einem vorangehenden Anspruch, wobei die ersten Seileinrichtungen (4, 5) am Querstück (51) in einem ersten Aufhängungspunkt (11) und in einem zweiten Aufhängungspunkt (12) befestigt sind und die zweiten Seileinrichtungen (6, 7) am Querstück (51) in einem dritten Aufhängungspunkt (13) und in einem vierten Aufhängungspunkt (14) befestigt sind.

**11.** System nach einem der Ansprüche 1 bis 9, wobei die ersten Seileinrichtungen (4, 5) am Querstück (51) in einem ersten Aufhängungspunkt (11) und in einem vierten Aufhängungspunkt (14) befestigt sind und die zweiten Seileinrichtungen (6, 7) am Querstück (51) in einem zweiten Aufhängungspunkt (12) und in einem dritten Aufhängungspunkt (13) befestigt sind.

**12.** System nach einem vorangehenden Anspruch, wobei die erste Betätigungseinrichtung (21) und die zweite Betätigungseinrichtung (22) jeweilige Hydraulikzylinder umfassen.

**13.** Portalwerkzeugmaschine, die mit einem Querstück (51) versehen ist, das entlang Pfosten (52, 53) beweglich ist und einen Arbeitskopf (54) verschiebbar abstützt, mit einem Ausgleichssystem (1) nach einem vorangehenden Anspruch.

**Revendications**

**1.** Système d'équilibrage pour une machine-outil (50) pourvue d'une traverse (51) qui est mobile le long de montants (52, 53) et supporte de manière coulissante une tête de travail (54) comprenant:

- des moyens compensateurs (2, 3) reliés à ladite traverse (51) par des moyens de câble (4, 5, 6, 7);
- des moyens actionneurs (21, 22) interposés entre lesdits moyens de câble (4, 5, 6, 7) et ladite traverse (51) et disposés pour exercer des forces compensatrices (F1, F2) qui sont réglables en fonction d'une position de ladite tête de travail (54) sur ladite traverse (51) de manière à limiter et/ou contrôler au moins une déformation de ladite traverse (51);

*caractérisé en ce que*:

- lesdits moyens compensateurs comprennent des premiers moyens compensateurs (2) et des deuxièmes moyens compensateurs (3) respectivement reliés à ladite traverse (51) au moyen de premiers moyens de câble (4, 5) et de deuxièmes moyens de câble (6, 7) desdits moyens de câble;
- lesdits moyens actionneurs comprennent des premiers moyens actionneurs (21) et des deuxièmes moyens actionneurs (22);
- lesdits premiers moyens de câble (4, 5) sont fixés à ladite traverse (51) dans une paire de points de suspension (11, 12, 13, 14), lesdits premiers moyens actionneurs (21) ou lesdits deuxièmes moyens actionneurs (22) étant associés à l'un des deux points de suspension (11, 12, 13, 14);
- lesdits deuxièmes moyens de câble (6, 7) sont fixés à ladite traverse (51) dans une autre paire de points de suspension (11, 12, 13, 14), lesdits deuxièmes moyens actionneurs (22) ou lesdits premiers moyens actionneurs (21) étant associés à l'un desdits deux autres points de suspension (11, 12, 13, 14).

**2.** Système selon la revendication 1, dans lequel chaque paire de points de suspension (11, 12, 13, 14) comprend un point de suspension (11, 13) qui est placé sur une portion d'extrémité (51a, 51b) de ladite traverse (51) et un point de suspension (12, 14) qui est placé sur une portion centrale (51c) de ladite traverse (51).

**3.** Système selon la revendication 1 ou 2, dans lequel lesdits premiers moyens de câble (4, 5) et lesdits deuxièmes moyens de câble (6, 7) exercent sur ladite traverse (51) des forces compensatrices respectives ($F_1$, $F_2$) dans les points de suspension (12, 14) auxquels lesdits moyens actionneurs (21, 22) sont associés et d'autres forces compensatrices respectives ($F_3$, $F_4$) dans les points de suspension respectifs restants (11, 13).

**4.** Système selon l'une quelconque des revendications précédentes, dans lequel lesdits premiers moyens compensateurs (2) et lesdits deuxièmes moyens compensateurs (3) exercent respectivement sur lesdits premiers moyens de câble (4, 5) et sur lesdits deuxièmes moyens de câble (6, 7) des forces d'équilibrage respectives (T).

**5.** Système selon la revendication 3 ou 4, dans lequel lesdits moyens de câbles (4, 5, 6, 7) exercent sur ladite traverse (51) une première force compensatrice ($F_1$) générée par lesdits premiers moyens actionneurs (21) dans un deuxième point de suspension (12), une deuxième force compensatrice ($F_2$) générée par lesdits deuxièmes moyens actionneurs (22) dans un quatrième point de suspension (14), une autre première force compensatrice ($F_3$) dans un premier point de suspension (11) et une autre deuxième force compensatrice ($F_4$) dans un troisième point de suspension (13).

**6.** Système selon la revendication 5, dans lequel ledit premier point de suspension (11) et ledit troisième point de suspension (13) sont positionnés sur des portions d'extrémité respectives (51a, 51b) de ladite traverse (51), en particulier opposés l'un à l'autre par rapport à un plan médian (H) de ladite traverse (51), ledit deuxième point de suspension (12) et ledit quatrième point de suspension (14) étant positionnés sur une portion centrale (51c) de ladite traverse (51), en particulier presque adjacents l'un à l'autre et opposés audit plan médian (H).

**7.** Système selon la revendication 5 ou 6, dans lequel ladite première force compensatrice ($F_1$) et ladite deuxième force compensatrice ($F_2$) peuvent être calculées en fonction d'une position d'un centre de gravité (G) d'un ensemble comprenant ladite traverse (51) et ladite tête de travail (54), en utilisant les formules:

$$(F_1 - F_2) \cdot (b - c) = 2T \cdot y \qquad\qquad \text{[Eq. 8]}$$

ou

$$(F_1 - F_2) \cdot (b + c) = 2T \cdot y \qquad\qquad \text{[Eq. 17]}$$

et

$$F_1 + F_2 = p \cdot T \qquad\qquad \text{[Eq. 9]}$$

où
b: distance dudit deuxième point de suspension (12) et dudit quatrième point de suspension (14) à partir d'un plan médian (H) de ladite traverse (51);
c: distance dudit premier point de suspension (11) et dudit troisième point de suspension (13) à partir dudit plan médian (H);
y: distance dudit centre de gravité (G) à partir dudit plan médian (H);
p: constante adimensionnelle variable entre 0 et 2, et en particulier comprise entre 1 et 1,5, de telle sorte que lesdites forces compensatrices (F1, F2) soient toutes les deux positives et propres à limiter une déformation de ladite traverse (51).

**8.** Système selon l'une quelconque des revendications précédentes, dans lequel lesdits premiers moyens compensateurs (2) et lesdits deuxièmes moyens compensateurs (3) comprennent respectivement un premier contrepoids, fixé auxdits premiers moyens de câble (4, 5) et un deuxième contrepoids, fixé auxdits deuxièmes moyens de câble (6, 7).

**9.** Système selon l'une quelconque des revendications précédentes, dans lequel lesdits premiers moyens de câble (4, 5) comprennent un premier câble (4) et un autre premier câble (5), chacun d'eux ayant des extrémités respectives fixées auxdits premiers moyens compensateurs (2) et à ladite traverse (51), et dans lequel lesdits deuxièmes moyens de câble (6, 7) comprennent un deuxième câble (6) et un autre deuxième câble (7), chacun d'eux ayant des extrémités respectives fixées auxdits deuxièmes moyens compensateurs (3) et à ladite traverse (51).

**10.** Système selon l'une quelconque des revendications précédentes, dans lequel lesdits premiers moyens de câble (4, 5) sont fixés à ladite traverse (51) dans un premier point de suspension (11) et dans un deuxième point de suspension (12), et lesdits deuxièmes moyens de câble (6, 7) sont fixés à ladite traverse (51) dans un troisième point de suspension (13) et dans un quatrième point de suspension (14).

**11.** Système selon l'une quelconque des revendications 1 à 9, dans lequel lesdits premiers moyens de câble (4, 5) sont fixés à ladite traverse (51) dans un premier point de suspension (11) et dans un quatrième point de suspension (14), et lesdits deuxièmes moyens de câble (6, 7) sont fixés à ladite traverse (51) dans un deuxième point de suspension (12) et dans un troisième point de suspension (13).

**12.** Système selon l'une quelconque des revendications précédentes, dans lequel lesdits premiers moyens actionneurs (21) et lesdits deuxièmes moyens actionneurs (22) comprennent des vérins hydrauliques respectifs.

13. Machine-outil à portique équipée d'une traverse (51) qui est mobile le long de montants (52, 53) et supporte de manière coulissante une tête de travail (54), comprenant un système d'équilibrage (1) selon l'une quelconque des revendications précédentes.

Fig. 1

EP 2 363 236 B1

Fig. 2

Fig. 3

Fig. 4

Fig. 5

$$F_3 = T - F_2 \qquad F_1 \qquad F_2 \qquad F_4 = T - F_1$$

$$P_{tr} + P_{te}$$

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2328404